# EUROPEAN PATENT SPECIFICATION

(11) **EP 1 716 041 B1**
(45) Date of publication and mention of the grant of the patent: **30.11.2011**
(21) Application number: 05710883.9
(22) Date of filing: 11.02.2005
(51) Int. Cl.: B63B 1/38

(54) **VESSEL WITH AIR CHAMBERS TO REDUCE THE RESISTANCE BETWEEN THE HULL AND THE WATER**
SCHIFF MIT LUFTKAMMERN ZUR VERRINGERUNG DES WIDERSTANDS ZWISCHEN DEM RUMPF UND DEM WASSER
BATEAU EQUIPE DE CHAMBRES A AIR POUR REDUIRE LA RESISTANCE ENTRE LA COQUE ET L'EAU

(30) Priority: 13.02.2004 NL 1025481
(43) Date of publication of application: 02.11.2006
(73) Proprietor: Marinvention B.V., 6652 BG Druten (NL)
(72) Inventor: Boon, Cornelis Arie Adrianus, 2971 VG Bleskensgraaf (NL); Kwakernaak, Willem, 6652 BB Druten (NL)
(74) Representative: van Westenbrugge, Andries
(86) International application number: PCT/NL2005/000102
(87) International publication number: WO 2005/077746

(56) References cited:
- FR-A- 526 039
- GB-A- 1 067 172
- US-A- 1 621 625
- US-A- 2 842 084
- US-A- 3 595 191
- US-A- 3 714 918
- US-A- 3 788 263

## Description

The invention relates to a vessel having a hull provided with a closed outer wall that delimits the water-displacing volume of the vessel, chambers on the outside of the outer wall that extend in the longitudinal direction of the hull and that can be in open communication with a body of water, in which the vessel can be located, as well as means for supplying air to said chambers to lower the frictional resistance of the hull with respect to said body of water.

Such a vessel is disclosed in NL-A 6815424, which is considered to be the closest prior art. With this known vessel the bottom of the hull is provided with a collar that is oriented downwards and extends around a large part of the bottom. Inside the collar three walls running in the longitudinal direction of the bottom and likewise oriented downwards are provided, which together with the collar form four chambers. These chambers, in turn, are each subdivided in the longitudinal direction by means of a number of transverse walls.

In this known vessel the wall that forms the bottom is made flat in the conventional manner. Vertically oriented partitions, which enclose the chambers between them, are welded to the outside of said flat bottom. Such a conventional construction is not ideal. Thus, for example, the partitions themselves must be sufficiently robust to be able to support the vessel on the bottom in a dry dock. This means that they have to be designed for much higher stresses than is required for their function of forming the chambers. A further disadvantage is that it is not readily possible to provide a relatively large number of chambers in an efficient manner: a further partition would have to be welded to the bottom for each chamber. A relatively large number of chambers has the advantage that the air contained therein is less easily able to escape, for example when the ship rolls.

The aim of the invention is therefore to provide a vessel of the abovementioned type that has a more rational construction. Said aim is achieved by the characterising features of claim 1.

With the vessel according to the invention the bottom is provided with chambers that are enclosed only by the wall of the vessel itself. This means that it is not necessary to install supplementary partitions. Furthermore, a relatively large number of chambers or channels can be formed in a fairly simple manner by choosing a suitable interval for the profile. A significant advantage of a bottom profiled in this way is, furthermore, that this has a higher inherent resistance to sagging as a consequence of the high moment of inertia compared with a flat bottom, for the same plate thickness and amount of material.

The profile of the outer wall of the vessel according to the invention can be made in many different ways. For instance, the wall sections oriented downwards can run at an angle or vertically. Furthermore, they can be straight or curved (in cross-section).

According to a preferred embodiment at least part of the outer wall has, in cross-section, a profile with lowered wall sections that on either side are joined to wall sections oriented downwards. Furthermore, at least part of the outer wall can have, in cross-section, a profile with raised wall sections that on either side are joined to wall sections oriented downwards.

As has been mentioned, the profile of the bottom can also be wave-shaped, for example in the form of a sine wave. The width of the raised sections can be approximately equal to the width of the lowered sections. A relatively low frictional resistance can be obtained if the width of the lowered sections is less than the width of the raised sections. The profile can also consist of V-shaped recesses in the bottom.

According to a preferred embodiment the profile is trapezium-shaped and constructed, for example, as a sheet piling profile. Such a profile can be produced in a simple manner and employed to give a bottom for the vessel. Furthermore, the hull can be made at least partially double-walled. In that case either the hull can have a bottom wall to the outside of which profiles are fixed at regular transverse distances or the bottom can have an inner wall as well as an outer wall with raised sections and lowered sections. In this latter case the bottom is completely double-walled, such that the increasingly more stringent requirements that are imposed on vessels for the transport of substances that constitute a risk to the environment in the event of leaks are met. Furthermore, the chambers can be divided in the longitudinal direction by means of at least one transversely oriented lowered section.

Reference is made to the vessel that is disclosed in GB-A 1 067 172. This vessel has a bottom that is delimited by a membrane impermeable to water that delimits a number of air chambers. Compressed air can be fed to the air chambers, which compressed air is then able to escape via the membrane in the form of fine air bubbles. The air bubbles formed in this way should reduce the friction between the vessel and the water. However, such a bottom construction is very vulnerable; for instance, the membrane can easily be damaged if the bottom of the vessel comes into contact with the water bed at low water levels, as in the case of a low river level.

US-A 3 714 918 discloses a vessel with a closed float body, on the underside of which there are a number of profiles. These profiles are in open communication with the surroundings and can therefore fill with water. By blowing air into the profiles these empty and an air curtain to reduce the frictional resistance between the hull and the water can be generated. The disadvantage of this vessel is that the profiles make no contribution to the buoyancy of the vessel.

The invention will be explained in more detail below with reference to a few illustrative embodiments shown in the figures.
Figure 1 shows a bottom view, in perspective, of a first embodiment of the vessel according to the invention.
Figure 2 shows a cross-section through the hull of the vessel.
Figure 3 shows a cross-section through a second embodiment.
Figure 4 shows a cross-section through a third embodiment.
Figure 5 shows a cross-section through a fourth embodiment.
Figure 6 shows a cross-section through a fifth embodiment.
Figure 7 shows the cross-section when the hull is tilted.
Figure 8 shows part of the stem of the hull.
Figure 9 shows part of the bottom in longitudinal section along IX-IX in Figure 8.
Figure 10 shows a perspective and sectional view of part of the bottom according to Figures 8 and 9, viewed from above.
Figure 11 shows a perspective and sectional view of part of the bottom, viewed from above, from Figure 3.
Figure 12 shows the air supply.
Figure 13 shows a further variant.

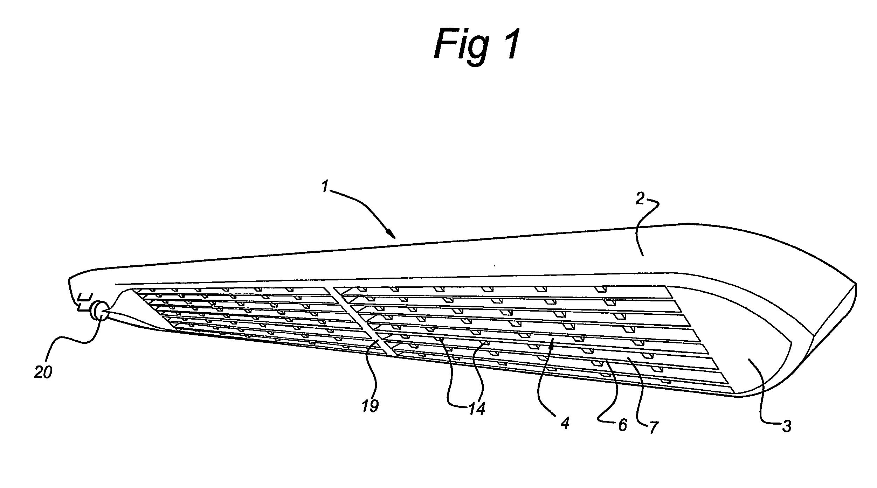

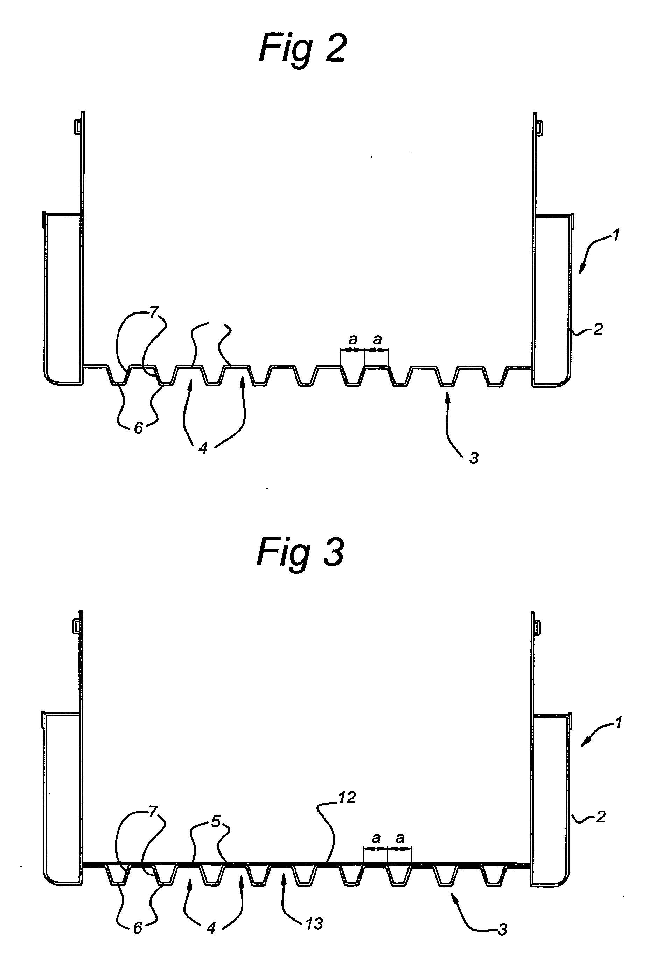

The vessel shown in perspective in Figure 1 has a hull indicated in its entirety by 1, which has an outer wall 2. The bottom 3 is provided with a large number of air chambers 4 that extend in the longitudinal direction of the hull 1. As shown in the cross-section in Figure 2, said chambers 4 are formed by a trapezium-shaped bottom 3. The trapezium shape has raised wall sections 5, lowered wall sections 6 and wall sections 7 linking these raised and lowered wall sections. A chamber 4 is delimited between every two of said linking wall sections 7 and a raised wall section 5. The interval a is constant in the transverse direction of the bottom 3. This means that the width of the raised wall sections 5 is equal to the width of the openings between said wall sections.

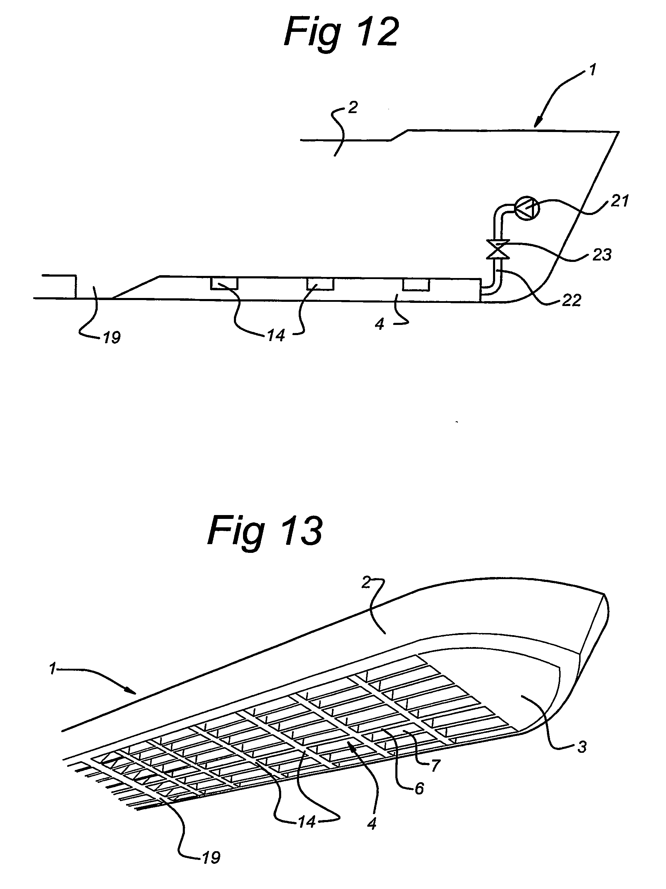

As a result of the use of such a bottom shaped in accordance with a trapezium profile, it is not only possible to obtain a relatively large number of chambers 4 alongside one another but, at the same time, the flexural rigidity against bending in a longitudinal plane is appreciably increased. The transverse reinforcements 14, constructed as tubular sections, intersect the chambers 4; in the variant in Figure 1 they do not continue as far as the level of the lowered wall section 6. As shown in the variant in Figure 13, they can also extend equally as far as the profile.

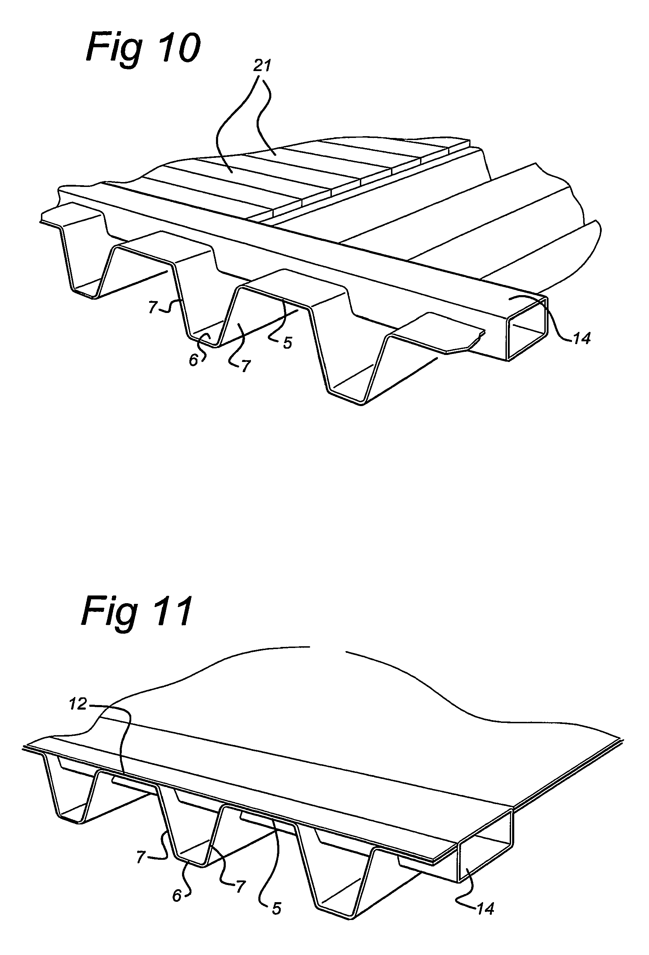

As shown in Figures 3 and 11, the bottom 3 can be made double-walled with the trapezium-shaped outer wall 6 on which a flat bottom plate 12 has been fitted. Such an embodiment is mainly suitable for ships for dry loads and the like. Interval a is constant here as well.

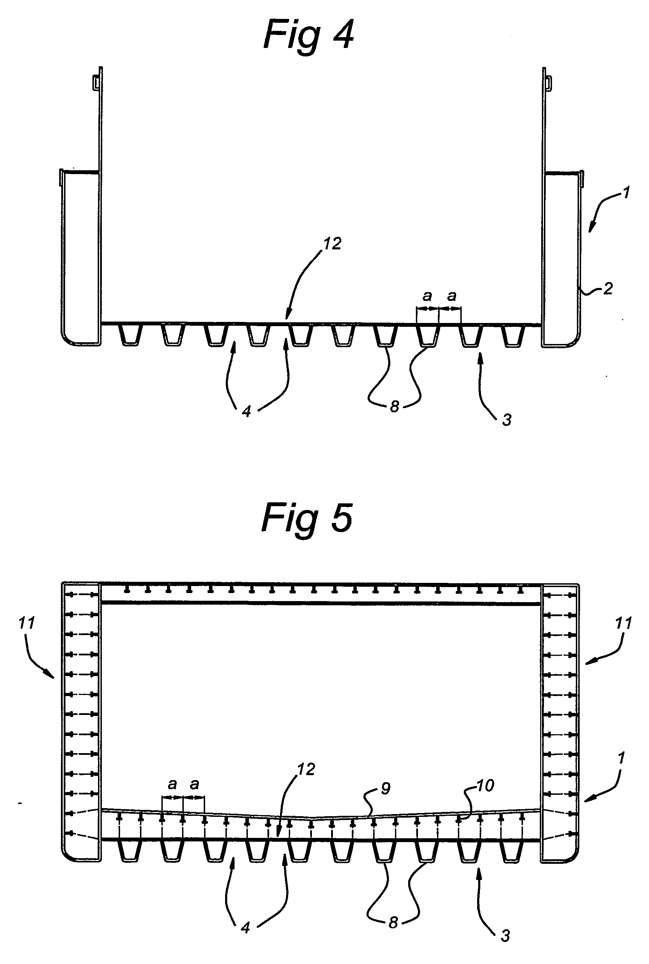

The embodiment in Figure 4 shows a variant where individual basket or upside-down hat profiles 8 have been welded to the outside of a flat bottom plate 12. The bottom 3 is consequently partially single-walled and in other locations, that is to say at the location of the profiles 8 double-walled. This bottom also affords the advantage of a relatively large number of air chambers 4 and a higher rigidity.

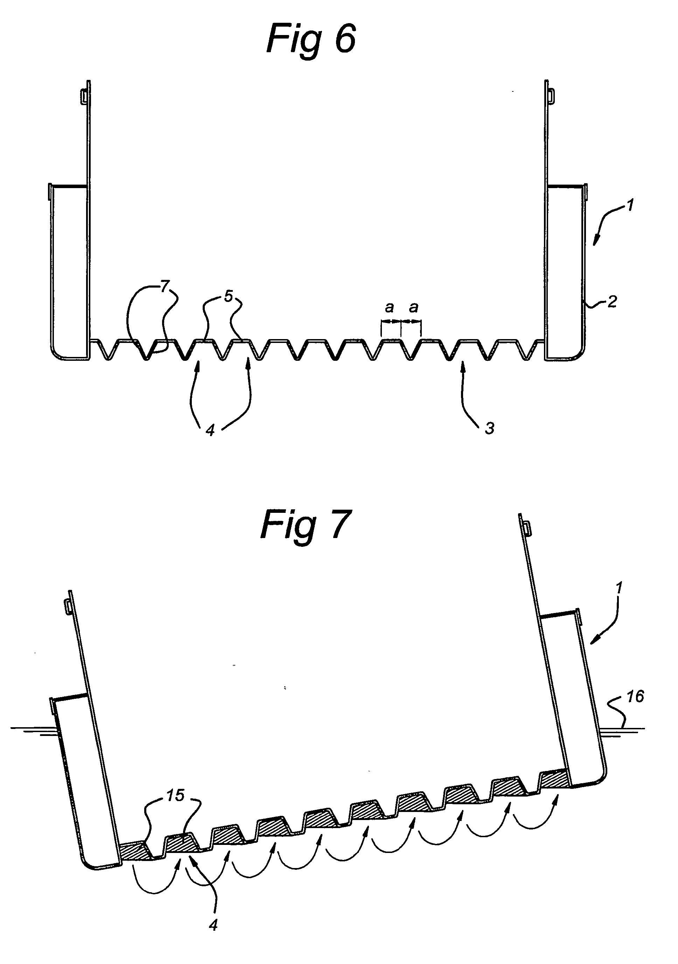

In the variant in Figure 5 a completely double-walled hull 1 is shown, consisting of a bottom plate 12 with basket or upside-down hat profiles 8 welded thereon, which in each case once again enclose air chambers 4. A loading base 9 provided with the conventional longitudinal stiffeners 10 is fitted above the bottom plate 12. The side walls 11 of the vessel are likewise made double-walled. The interval a is constant. Figure 6 shows a variant where the bottom 3 has V-shaped profiling with wall sections 7 oriented at an angle to one another.

A particular advantage of the relatively large number of air chambers 4 is shown in Figure 7. As will be clear, each of these air chambers contains a quantity of air 15. When the vessel 1 is at somewhat of an angle in the body of water 16, the air 15 can escape from the chambers 4 at the side. As a consequence of the relatively large number of chambers 4, however, with this arrangement the majority of air passes into an adjoining chamber, whilst the air escapes from the bottom of the ship only at the chamber that is located highest. The consequence of this is that the reduced friction remains largely intact even when the ship is rolling. Furthermore, it must be borne in mind that, if necessary, air is fed to the chambers 4 by the air supply means (not shown), so that for this reason as well the friction-lowering effect of the chambers 4 will be maintained.

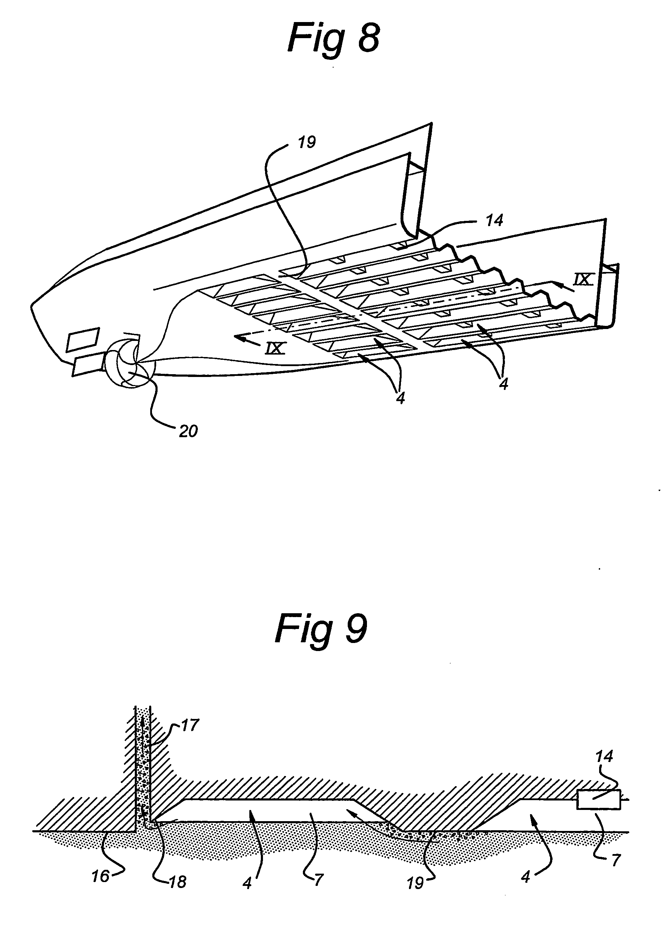

In the perspective view in Figure 8 and the longitudinal section in Figure 9 the stem section of the bottom is shown, with the rearmost chambers 4. A vent line 17 is provided adjoining the rearmost boundary of the rearmost chamber 4. During operation air can escape from the preceding chambers, as a result of which the rearmost chambers are continually fed with air. The consequence of this is that air bubbles could reach the screw 20, which is located further behind these.

To counteract this effect, the vent line 17 connected to all rearmost chambers 4 is provided. For this purpose the rearmost boundary 18 of these chambers 4 is somewhat higher than the level at which the rearmost, transversely oriented lowered section 19 is in contact with the water 16. As a result it is always ensured that any surplus air in the rearmost chamber escapes via the vent line 17 and not via the stern of the ship and the screw 20.

As can be seen in Figures 10 and 11, the transverse reinforcements 14 constructed as tubular sections protrude above the wall sections 5. There is a floor consisting of planks 21 on these wall sections 5 and in contact with the transverse reinforcements 14. The top surface of these planks 21 is flush with the top surface of the transverse stiffeners14.

The air supply means 21-23 are shown in Figure 12. These comprise a compressor 21 that is in communication with the chambers 4 via a line 22. The feed line 22 can be closed off via a valve 23 when the pump 21 is not in operation. By this means it can be ensured that the air present in the chambers 4 cannot escape. It will be clear that the air can be fed separately to all chambers 4, for example via a manifold (not shown).

## Claims

1. Vessel having a hull (1) provided with a closed outer wall (2) that delimits the water-displacing volume of the vessel, chambers (4) on the outside of the outer wall (2) that extend in the longitudinal direction of the hull (1) and that are in open communication with a body of water, in which the vessel is located, as well as means (21, 23) for supplying air to said chambers to lower the frictional resistance of the hull (1) with respect to said body of water, **characterised in that** at least portion of the outer wall (2) has, in cross-section, a profile with wall sections (7) extending downwards constituting longitudinal stiffeners, such that in each case at least two of such wall sections (7) delimit a chamber (4), and **in that** transverse stiffeners (14) are provided that are joined to the wall sections delimiting the chamber (4).

2. Vessel according to Claim 1, wherein at least part of the outer wall (2) has, in cross-section, a profile with lowered wall sections (6) that on either side are joined to wall sections (7) oriented downwards.

3. Vessel according to Claim 2, wherein at least part of the outer wall (2) has, in cross-section, a profile with raised wall sections (5) that on either side are joined to wall sections (7) oriented downwards.

4. Vessel according to Claim 3, wherein the width of the raised sections (5) is approximately equal to the width of the lowered sections (6).

5. Vessel according to Claim 3, wherein the width of the lowered sections (6) is less than the width of the raised sections (5).

6. Vessel according to one of Claims 3 - 5, wherein the width of the raised wall sections (5) is approximately equal to the interval between two of said raised wall sections (5).

7. Vessel according to Claims 3 - 6, wherein the profile is trapezium-shaped, for example such as a sheet piling profile.

8. Vessel according to one of Claims 1 - 6, wherein the profile is wave-shaped.

9. Vessel according to one of the preceding claims, wherein the hull (1) is made at least partially double-walled.

10. Vessel according to Claim 9, wherein the hull (1) has a bottom wall to the outside of which basket or upside-down hat profiles (8) are fixed at regular transverse distances, which bottom wall and profiles (8) together define the outer wall.

11. Vessel according to Claim 9, wherein the bottom (3) has an inner wall (12) as well as an outer wall (13) with raised sections (5) and lowered sections (6).

12. Vessel according to one of the preceding claims, wherein the chambers (4) are divided in the longitudinal direction by means of at least one transversely oriented lowered section (19).

13. Vessel according to any of the preceding claims, wherein the transverse stiffeners (14) extend through the chambers (4).

14. Vessel according to any of the preceding claims, wherein the transverse stiffeners (14) extend downwards equally as far as the profile.

15. Vessel according to one of the preceding claims, wherein the profile is on the bottom side (3) of the hull (1).

16. Vessel according to one of the preceding claims, wherein the air supply means (21-23) can be shut-off.

## Patentansprüche

1. Wasserfahrzeug, das einen Rumpf (1) besitzt, der versehen ist mit einer geschlossenen äußeren Wand (2), die das Wasserverdrängungsvolumen des Wasserfahrzeugs begrenzt, Kammern (4) an der Außenseite der äußeren Wand (2), die sich in Längsrichtung des Rumpfes (1) erstrecken und mit einem Wasserkörper, in dem sich das Wasserfahrzeug befindet, in offener Kommunikation stehen, sowie Mitteln (21, 23) zum Zuführen von Luft zu den Kammern, um den Reibwiderstand des Rumpfes (1) in Bezug auf den Wasserkörper zu verringern, **dadurch gekennzeichnet, dass** wenigstens ein Abschnitt der äußeren Wand (2) im Querschnitt ein Profil mit Wandabschnitten (7), die sich nach unten erstrecken und longitudinale Versteifungseinrichtungen bilden, besitzt, so dass in jedem Fall wenigstens zwei solche Wandabschnitte (7) eine Kammer (4) begrenzen, und dass transversale Versteifungseinrichtungen (14) vorgesehen sind, die mit den die Kammer (4) begrenzenden Wandabschnitten verbunden sind.

2. Wasserfahrzeug nach Anspruch 1, wobei wenigstens ein Teil der äußeren Wand (2) im Querschnitt ein Profil besitzt, das untere Wandabschnitte (6) aufweist, die auf jeder Seite mit nach unten orientierten Wandabschnitten (7) verbunden sind.

3. Wasserfahrzeug nach Anspruch 2, wobei wenigstens ein Teil der äußeren Wand (2) im Querschnitt ein Profil besitzt, das erhöhte Wandabschnitte (5) aufweist, die auf jeder Seite mit nach unten orientierten Wandabschnitten (7) verbunden sind.

4. Wasserfahrzeug nach Anspruch 3, wobei die Breite der erhöhten Abschnitte (5) angenähert gleich der Breite der abgesenkten Abschnitte (6) ist.

5. Wasserfahrzeug nach Anspruch 3, wobei die Breite der abgesenkten Abschnitte (6) geringer ist als die Breite der erhöhten Abschnitte (5).

6. Wasserfahrzeug nach einem der Ansprüche 3-5, wobei die Breite der erhöhten Wandabschnitte (5) angenähert gleich dem Intervall zwischen zwei der erhöhten Wandabschnitte (5) ist.

7. Wasserfahrzeug nach den Ansprüchen 3-6, wobei das Profil trapezförmig ist, beispielsweise wie ein Bohlenwandprofil.

8. Wasserfahrzeug nach einem der Ansprüche 1-6, wobei das Profil wellenförmig ist.

9. Wasserfahrzeug nach einem der vorhergehenden Ansprüche, wobei der Rumpf (1) wenigstens teilweise doppelwandig ausgebildet ist.

10. Wasserfahrzeug nach Anspruch 9, wobei der Rumpf (1) eine Bodenwand besitzt, an dessen Außenseite Profile (8) in Form eines Korbs oder eines umgedrehten Huts in regelmä-βigen transversalen Abständen befestigt sind, wobei die Bodenwand und die Profile (8) zusammen die äußere Wand definieren.

11. Wasserfahrzeug nach Anspruch 9, wobei der Boden (3) eine innere Wand (12) sowie eine äußere Wand (13) mit erhöhten Abschnitten (5) und unteren Abschnitten (6) besitzt.

12. Wasserfahrzeug nach einem der vorhergehenden Ansprüche, wobei die Kammern (4) in der Längsrichtung mittels wenigstens eines transversal orientierten abgesenkten Abschnitts (19) unterteilt sind.

13. Wasserfahrzeug nach einem der vorhergehenden Ansprüche, wobei die transversalen Versteifungseinrichtungen (14) durch die Kammern (4) verlaufen.

14. Wasserfahrzeug nach einem der vorhergehenden Ansprüche, wobei sich die transversalen Versteifungseinrichtungen (14) ebenso weit wie das Profil nach unten erstrecken.

15. Wasserfahrzeug nach einem der vorhergehenden Ansprüche, wobei sich das Profil auf der Bodenseite (3) des Rumpfes (1) befindet.

16. Wasserfahrzeug nach einem der vorhergehenden Ansprüche, wobei die Luftzufuhrmittel (21-23) abgeschaltet werden können.

## Revendications

1. Bateau ayant une coque (1) pourvue d'une paroi externe fermée (2) qui délimite le volume de déplacement d'eau du bateau, des chambres (4) à l'extérieur de la paroi externe (2) qui s'étendent dans le sens longitudinal de la coque (1) et qui sont en communication ouverte avec une masse d'eau dans laquelle se trouve le bateau, ainsi que des moyens (21, 23) permettant de fournir de l'air auxdites chambres pour réduire la résistance de frottement de la coque (1) par rapport à ladite masse d'eau, **caractérisé en ce qu'**au moins une partie de la paroi externe (2) comporte, en coupe transversale, un profil doté de sections de paroi (7) s'étendant vers le bas et constituant des raidisseurs longitudinaux, de sorte que dans chaque cas au moins deux de ces sections de paroi (7) délimitent une chambre (4), et **en ce que** sont prévus des raidisseurs transversaux (14) qui sont reliés aux sections de paroi délimitant la chambre (4).

2. Bateau selon la revendication 1, dans lequel au moins une partie de la paroi externe (2) comporte, en coupe transversale, un profil doté de sections de paroi abaissées (6) qui, de part et d'autre, sont reliées aux sections de paroi (7) orientées vers le bas.

3. Bateau selon la revendication 2, dans lequel au moins une partie de la paroi externe (2) comporte, en coupe transversale, un profil doté de sections de paroi surélevées (5) qui, de part et d'autre, sont reliées aux sections de paroi (7) orientées vers le bas.

4. Bateau selon la revendication 3, dans lequel la largeur des sections surélevées (5) est approximativement égale à la largeur des sections abaissées (6).

5. Bateau selon la revendication 3, dans lequel la largeur des sections abaissées (6) est inférieure à la largeur des sections surélevées (5).

6. Bateau selon l'une quelconque des revendications 3 à 5, dans lequel la largeur des sections de paroi surélevées (5) est approximativement égale à l'intervalle entre deux desdites sections de paroi surélevées (5).

7. Bateau selon l'une quelconque des revendications 3 à 6, dans lequel le profil est en forme de trapèze, par exemple comme un profil de palplanches.

8. Bateau selon l'une quelconque des revendications 1 à 6, dans lequel le profil est ondulé.

9. Bateau selon l'une quelconque des revendications précédentes, dans lequel la coque (1) est au moins en partie à double paroi.

10. Bateau selon la revendication 9, dans lequel la coque (1) comporte une paroi formant fond à l'extérieur de laquelle des profilés en forme de panier ou de chapeau renversé (8) sont fixés selon des distances transversales régulières, ladite paroi formant fond et lesdits profils (8) définissant, ensemble, la paroi externe.

11. Bateau selon la revendication 9, dans lequel le fond (3) comporte une paroi interne (12) ainsi qu'une paroi externe (13) dotée de sections surélevées (5) et de sections abaissées (6).

12. Bateau selon l'une quelconque des revendications précédentes, dans lequel les chambres (4) sont séparées dans le sens longitudinal au moyen d'au moins une section abaissée orientée de manière transversale (19).

13. Bateau selon l'une quelconque des revendications précédentes, dans lequel les raidisseurs transversaux (14) s'étendent à travers les chambres (4).

14. Bateau selon l'une quelconque des revendications précédentes, dans lequel les raidisseurs transversaux (14) s'étendent vers le bas autant que le profil.

15. Bateau selon l'une quelconque des revendications précédentes, dans lequel le profil se trouve sur le côté formant fond (3) de la coque (1).

16. Bateau selon l'une quelconque des revendications précédentes, dans lequel les moyens d'alimentation en air (21 à 23) peuvent être arrêtés.
